# EUROPEAN PATENT SPECIFICATION

(11) **EP 0 388 198 B1**
(45) Date of publication and mention of the grant of the patent: **13.10.1993**
(21) Application number: 90302774.6
(22) Date of filing: 15.03.1990
(51) Int. Cl.: F16B 39/20, F16B 41/00

(54) **Safety cable for fasteners**
Sicherungskabel für Befestigungsmittel
Câble de sûreté pour dispositifs de fixation

(30) Priority: 16.03.1989 US 324501
(43) Date of publication of application: 19.09.1990
(73) Proprietor: GENERAL ELECTRIC COMPANY, Schenectady, NY 12345 (US)
(72) Inventor: Lerman, Theodore Bernard, Cincinnati, Ohio 45242 (US); Basse, Bernard William, Cincinnati, Ohio 45208 (US)
(74) Representative: Pratt, Richard Wilson

(56) References cited:
- DE-A- 2 361 180
- US-A- 1 574 578
- US-A- 2 890 734

## Description

The invention relates to tie wire systems which prevent loosening of threaded fasteners. Such loosening can be induced by vibration of machines on which the fasteners are used.

Gas turbine engines and other types of machinery are subject to vibration which can loosen nuts and bolts. Safety wire is often used as backup protection in order to prevent the loosening. Safety wiring is the securing together of two or more parts with wire such that any tendency to loosen will be counteracted by an additional tightening of the wire.

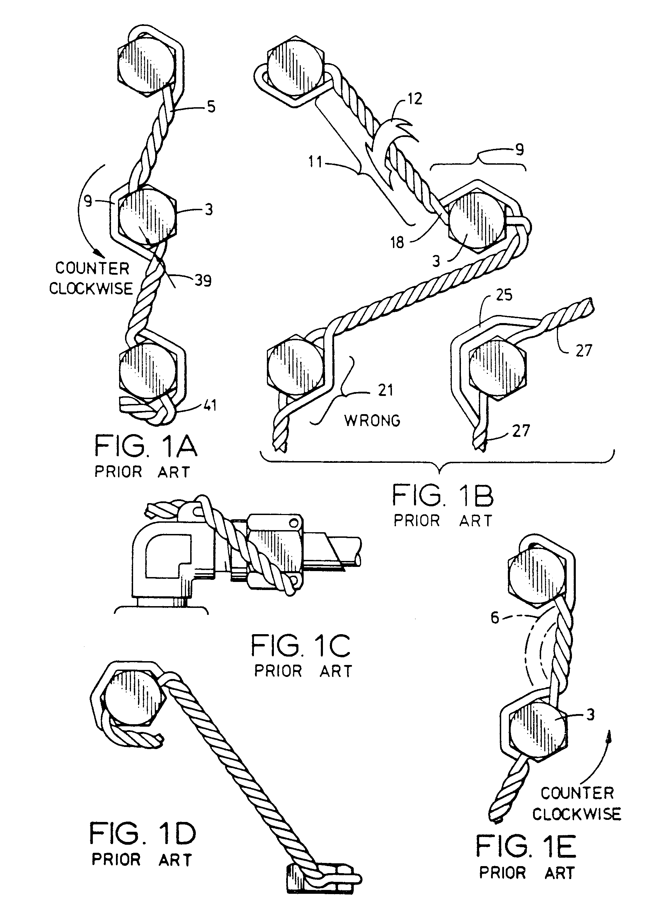

Several types of safety wire are shown in Figures 1A-1E. Several aspects of these wires should be noted. One, the wire should be positioned such that loosening of a bolt causes an increase, rather than a decrease, in tension of the wire. The increasing tension opposes further loosening. That is, assuming that counterclockwise rotation of bolt 3 in Figure 1A loosens the bolt, then such rotation tightens wire pair 5, and the tightening inhibits further rotation and loosening of the bolt. However, if the configuration is that of Figure 1E, the same rotation loosens the wire as indicated by phantom wire 6. This latter configuration must be avoided.

A second aspect is that the direction (clockwise or counterclockwise) of wire twisting must be proper so that the wire section 9 in Figure 1B which skirts the bolt 3 cannot unravel. That is, for example, the skirting section 9 is part of a counterclockwise-twisted section 11 (counterclockwise direction is indicated by arrow 12.) With this counterclockwise twisting, the skirting section 9 is pinned against rotation by the other wire 18. In contrast, skirting section 21 in Figure 1B is not pinned in the same manner, and this latter skirting section 21 can rotate into position 25, thus loosening tension on the twisted wire pair 27. Thus, it is required that a skirting section be properly pinned by its companion wire.

A third aspect is that the number of twists per running inch of twisted wire must be held within a predetermined range.

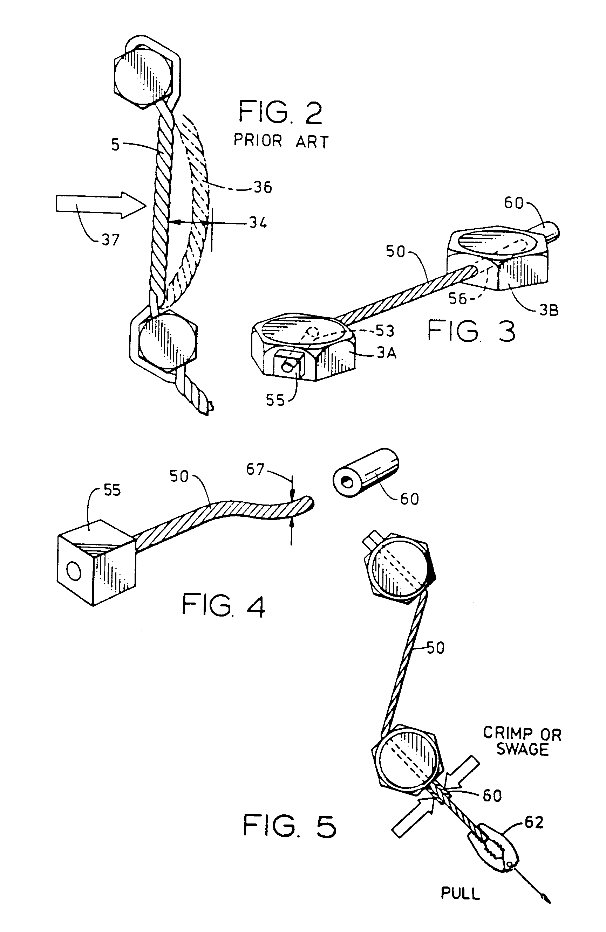

A fourth aspect is that the twisted wire must have a tension which is within acceptable limits. The tension is commonly measured as shown in Figure 2, wherein deflection 34 of the twisted wire 5 into position 36 under a specified force 37 must not exceed a certain maximum.

A fifth aspect is that the maximum gap 39 between a bolt head 3 in Figure 1A and the termination point of wire twisting must not exceed a limit, such as one-eighth inch.

A sixth aspect is that the pigtail 41 (i.e., the final length of the locking wire trailing from the last bolt which is fastened) must not exceed a certain length, must have a certain number of twists, and must be bent toward the bolt to assure that the cut ends are not exposed to cause snags.

A seventh aspect is that excessive nicks and kinks in the wire are to be avoided.

In order to properly install a safety wire in all of the preceding aspects, sometimes several attempts are necessary because of the difficulty involved. Further, sometimes a subjective judgement is involved as to whether a given installation is proper. For example, there is no generally agreed standard as to what nicks and kinks are acceptable. Therefore, some quality control inspectors may fail a given wire installation, while others may pass the same installation.

The two facts that (1) the difficulty of the installation requires multiple attempts and (2) some installations are rejected by inspectors when, perhaps, they should not be, cause increased cost in assembling the safety wire installations.

Further information concerning industry practices regarding safety wiring can be found in Aerospace Standard AS567, entitled "General Practices for the use of Lockwire, Key Washer, and Cotter Pins," available from the Society of Automotive Engineers, Inc., 400 Commonwealth Drive, Warrendale, Pennsylvania.

One previously proposed installation is described in US-A-2,890,734 which describes a typical wire locked bolt assembly wherein a first wire extends through a fastener hole and a second wire is wrapped around the fastener and the first and second wires are twisted into a twisted pair encompassing the fastener.

It is an object of the present invention to provide an improved safety cable system for threaded fasteners.

According the present invention is directed to apparatus for preventing threaded fasteners from loosening comprising at least two unitary threaded fasteners each having a completely enclosed hole extending therethrough and CHARACTERIZED BY: a single multi-strand wire cable comprising at least three wires extending through each hole; at least two beads each fixedly bonded to the cable near different fasteners wherein said fasteners are located on said cable between said beads for fixedly attaching said cable to said fasteners for preventing cable detachment from said beads and fasteners while alsos preventing said fasteners from loosening; and the cross-sectional area of each of said beads being lager then the cross-sectional area of a hole in each of said fasteners.

For a better understanding of the present invention, reference will now be made, by way of example, to the accompanying drawings, in which:

Figures 1A, 1B, 1D, and 1E illustrate bolts fastened with safety wire in the prior art manner.

Figure 1C illustrates a tube end fitting fastened with safety wire in the prior art manner;

Figure 2 illustrates a method of measuring wire tension of the prior art safety wires.

Figures 3 and 4 illustrate one form of the invention.

Figure 5 illustrates installation of the invention.

Figure 6 illustrates a fused end of the cable 50 in Figure 4.

Figure 7 illustrates the fact that frayed strands 82 of a non-fused cable 50 inhibit entry of the cable into hole 53.

Figure 8 illustrates a chisel point on a prior art safety wire resulting from cutting with a wire cutter.

Figure 9 illustrates an extreme case of unequal tension sharing in a twisted wire pair.

Figure 10 illustrates another form of the invention, in which several beads or ferrules 60 are installed.

Figure 3 illustrates one form of the invention. A wire cable 50 is fed through holes 53 and 56 in two bolt heads 3A and 3B until a bead 55 abuts bolt head 3A. A sleeve or bead 60, also shown in Figure 4, is then threaded onto the cable. A suitable tension of between 5 and 50 pounds is applied to the cable. In Fig. 5, pliers 62 indicate schematically the application of tension. A crimping tool (not shown), known in the art, deforms the sleeve 60 in order to attach the sleeve onto the cable and prevent withdrawal of the cable from the holes. The end of the cable 50 is cut flush with the end of the bead 60 for safety.

One type of cable 50 is that available as part number 990-01-744, available form Bergen Cable Technologies, Lodi, New Jersey. This cable is constructed to military specification MIL-W-83420. The cable diameter 67 in Figure 4 is approximately 1/32 inch. The cable consists of 21 strands, each about 0.006 inch (ie, six mils) in diameter.

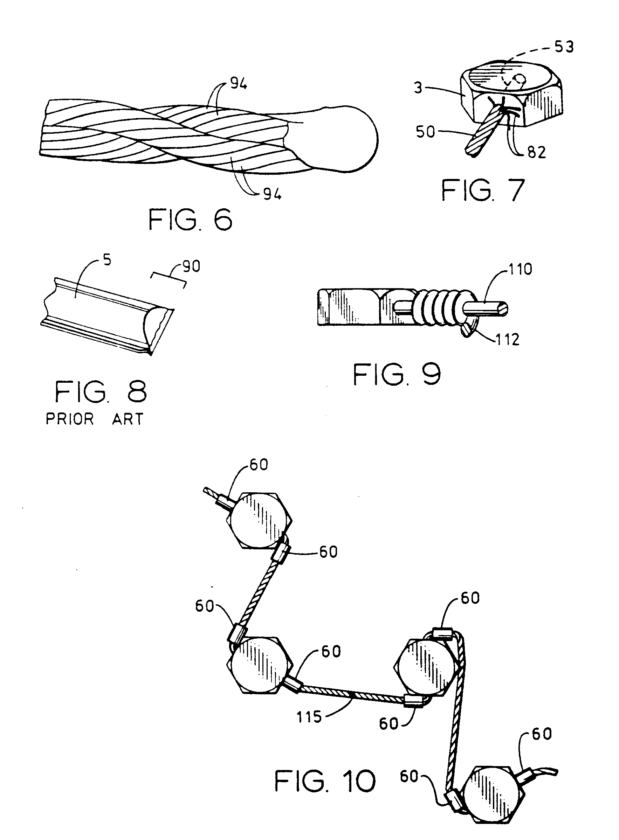

Each cable 50 in Figure 4 is preferably cut from a longer cable (not shown) using an electric arc cutter, in a commercially available process. This arc cutting provides two advantages. First, the arc cutting bonds the ends of neighboring strands together by welding. This welding prevents unraveling of the individual strands, which is undesirable, because the unraveled strands 82 in Figure 7 prevent insertion of the cable into a hole 53 in a bolt 3.

A second advantage of arc cutting is that the arc cutting fuses the end of the cable into a rounded shape, shown in Figure 6, which facilitates installation into the holes 53.

Such fusing is in contrast to the situation existing in prior art locking wires, where a common wire cutter is often used for cutting the wire 5 in Figure 8. Such cutting leaves a chisel point 90 having a larger diameter than the wire itself and the larger diameter can obstruct installation.

Of course, arc cutting is not strictly necessary to attain bonded and fused ends: Standard cutting can be done, followed by bonding or fusing. Further, the bonding and fusing can be done in one step: the fusing can cause the bonding of cable strands by welding them together.

Cable is believed to be more self-damping under vibration than is solid wire.

The use of cable eliminates non-uniform wire loading which occurs in the prior art approaches of Figures 1A-1E. That is, in the prior art approach, a twisting tool (not shown) grabs the two wires and rotates them in order to twist them into the configuration shown in Figures 1A-1E. However, the tool does not always apply equal tension to both wires, and so the wires do not equally share the tension on the twisted pair, as an extreme example will show.

The extreme example is shown in Figure 9, wherein one wire 110 remains straight, and the second wire 112 is twisted about it. It is clear that the straight wire 110 carries most, if not all, of the tension load of the pair. In general, the twisted wire pairs of Figures 1A-1E exhibit this unequal load sharing to some degree.

The use of a stranded cable reduces or eliminates this unequal load sharing because the cable is factory-made under tightly controlled conditions. Such manufactured cable is highly uniform in construction, with the individual strands carefully arranged to equally share load. Therefore, in order to attain a given tensile strength, a smaller total cross section of individual strands can be used because each strand carries an approximately equal share of the total tensile load. Such is not the case with the extreme example of Figure 9, and is also probably not the case with the configurations of Figures 1A-1E. This smaller cross section can provide a weight saving which is important in aircraft applications.

Cable is constructed, for example, to meet the requirements of MILW 83420, which is a Military Specification entitled "Wire Rope, Flexible, for Aircraft Control," and is hereby incorporated by reference.

In this respect, the twisted pairs of Figures 1A-1E should not be considered to be a "cable" for at least the reason that breakage of a single wire will destroy the entire "cable", in the sense that "cable" can then be removed from the bolt 3. In contrast, breakage of a single strand of the cable 50 of Figure 3, irrespective of the location of the break, will not allow removal.

As shown in Figure 1C, the cable may be used to tie a bolt to an anchor such as a tab through which the safety wire may be threaded. As shown in Figure 3, the anchor may be another bolt 3B through which the wire cable 50 is threaded and fastened by means of bead 60. Alternatively, it is also possible to thread the wire cable through a tab such as that which is illustrated in Figure 1C using the bead 60 in a manner similar to Figure 8.

Numerous substitutions and modifications can be undertaken to the invention without departing from the true spirit and scope of the invention. For example, the application of the invention to bolts has been described. However, the invention is applicable also to threaded nuts, and threaded fasteners generally. As a second example, additional beads 60 or sleeves can be added as shown in Figure 10. These added beads act as fail-safe mechanisms in case the original beads fail or the cable breaks for example at point 115. The added beads prevent the cable from withdrawing from the remaining bolts.

## Claims

1. Apparatus for preventing threaded fasteners (3) from loosening comprising at least two unitary threaded fasteners (3) each having a completely enclosed hole (53) extending therethrough and CHARACTERIZED BY:
a single multi-strand wire cable (50) comprising at least three wires extending through each hole (53);
at least two beads (60) each fixedly bonded to the cable (50) near different fasteners wherein said fasteners are located on said cable (50) between said beads (60) for fixedly attaching said cable (50) to said fasteners (3) for preventing cable detachment from said beads (60) and fasteners (3) while also preventing said fasteners from loosening; and,
the cross-sectional area of each of said beads (60) being larger than the cross-sectional area of a hole (53) in each of said fasteners.

2. Apparatus according to claim 1 further CHARACTERIZED BY a bead (60) fixedly attached to said cable (50) on each side of at least one fastener (3).

3. Apparatus according to claim 1 or claim 2 further CHARACTERIZED BY each bead (60) being attached to the cable (50) by mechanical deformation of the bead (60).

4. Apparatus according to claim 1 CHARACTERIZED BY at one of the threaded fasteners (3A) being an anchor and having a bead (55) adjacent thereto fastened to a terminal end of said cable.

5. Apparatus according to any one of the preceding claims CHARACTERIZED BY a tension substantially in the range from 22 to 67 Newtons (from 5 to 15 pounds) being applied to said cable (50).

## Patentansprüche

1. Einrichtung zum Verhindern des Lösens von mit Gewinde versehenen Befestigungsgliedern (3), die wenigstens zwei einheitliche Befestigungsglieder (3) mit jeweils einem vollständig umschlossenen Loch (53) aufweisen, das sich durch das Befestigungsglied erstreckt, gekennzeichnet durch:
ein einzelnes mehrsträngiges Drahtkabel (50), das wenigstens drei Drähte aufweist, die sich durch jedes Loch (53) erstrecken;
wenigstens zwei Wülste (60), die jeweils mit dem Kabel (60) nahe unterschiedlichen Befestigungsgliedern fest verbunden sind, wobei die Befestigungsglieder auf dem Kabel (50) zwischen den Wülsten (60) angeordnet sind zum festen Anbringen des Kabels (50) an den Befestigungsgliedern (3), um ein Lösen des Kabels von den Wülsten (60) und den Befestigungsgliedern (3) zu verhindern und auch ein Lösen der Befestigungsglieder zu verhindern;
wobei die Querschnittsfläche von jedem Wulst (60) größer ist als die Querschnittsfläche von einem Loch (53) in jedem Befestigungsglied.

2. Einrichtung nach Anspruch 1, dadurch gekennzeichnet, daß ein Wulst (60) an dem Kabel (50) auf jeder Seite von wenigstens einem Befestigungsglied (3) fest angebracht ist.

3. Einrichtung nach Anspruch 1 oder 2, dadurch gekennzeichnet, daß jeder Wulst (60) an dem Kabel (50) durch mechanische Verformung des Wulstes (60) angebracht ist.

4. Einrichtung nach Anspruch 1, dadurch gekennzeichnet, daß an einem der mit Gewinde versehenen Befestigungsglieder (3A) eine Verankerung ist und benachbart dazu ein Wulst (50) vorgesehen ist, der an einem Abschlußende des Kabels befestigt ist.

5. Einrichtung nach einem der Ansprüche 1 bis 4, dadurch gekennzeichnet, daß auf das Kabel (50) ein Zug im wesentlichen in dem Bereich von 22 bis 67 Newton (von 5 bis 15 US-Pfund) ausgeübt ist.

## Revendications

1. Agencement pour empêcher le desserrement d'éléments de fixation filetés (3) comprenant au moins deux éléments de fixation individuels filetés (3) comportant chacun un trou (53) formé entièrement à l'intérieur de ces éléments et de façon traversante, **caractérisé** par le fait que :
un seul câble (50) formé de fils métalliques multibrins et comprenant au moins trois fils métalliques s'étend à travers chaque trou (53) ;
au moins deux perles (60) sont assujetties fixement au câble (50) près des différents éléments de fixation, lesdits éléments de fixation étant situés sur ledit câble (50) entre les perles (60) pour attacher fixement le câble (50) aux éléments de fixation (3) afin d'empêcher le câble de se détacher des perles (60) et des éléments de fixation (3) tout en empêchant également les éléments de fixation de se desserrer ; et
la superficie de section droite de chacune des perles (60) est plus grande que la superficie de section droite d'un trou (53) de chacun des éléments de fixation précités.

2. Appareil selon la revendication 1, **caractérisé** en outre par le fait qu'une perle (60) est assujettie fixement au câble 50 sur chaque côté d'au moins un élément de fixation (3)

3. Appareil selon la revendication 1 ou la revendication 2, **caractérisé** en outre par le fait que chaque perle (60) est assujettie au câble (50) par déformation mécanique de cette perle (60).

4. Appareil selon la revendication 1, **caractérisé** par le fait qu'à un des éléments de fixation fileté (3A) se trouve un élément d'ancrage et qu'une perle (55) qui lui est adjacente est fixée à une extrémité dudit câble.

5. Appareil selon l'une quelconque des revendications précédentes, **caractérisé** par le fait qu'une traction sensiblement de l'ordre de 22 à 67 Newtons (de 5 à 15 livres) est appliquée audit câble (50).
